(19)

Europäisches Patentamt

European Patent Office

Office européen des brevets

(11) **EP 4 552 738 A1**

(12) **EUROPEAN PATENT APPLICATION**

(43) Date of publication:
**14.05.2025 Bulletin 2025/20**

(21) Application number: **23208846.8**

(22) Date of filing: **09.11.2023**

(51) International Patent Classification (IPC):
**B01J 23/745** (2006.01)  **B01J 23/75** (2006.01)
**B01J 27/24** (2006.01)  **B01J 31/12** (2006.01)
**B01J 35/00** (2024.01)  **B01J 35/61** (2024.01)
**B01J 35/63** (2024.01)  **B01J 35/64** (2024.01)
**B01J 37/04** (2006.01)  **C01C 1/04** (2006.01)

(52) Cooperative Patent Classification (CPC):
**B01J 27/24; B01J 23/745; B01J 23/75;
B01J 31/121; B01J 35/19; B01J 35/613;
B01J 35/633; B01J 35/647; B01J 37/04;
C01C 1/0411**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **CASALE SA**
**6900 Lugano (CH)**

(72) Inventors:
- **PIZZOLITTO, Cristina**
  **33080 Zoppola (PN) (IT)**
- **BIASI, Pierdomenico**
  **22100 Como (IT)**
- **GAIGNEAUX, Eric**
  **1450 Blanmont (BE)**
- **GAMEZ RIVERA, Sebastian Antonio**
  **1348 Louvain-la-Neuve (BE)**

(74) Representative: **M. Zardi & Co S.A.**
**Via G. B. Pioda, 6**
**6900 Lugano (CH)**

(54) **SOLID MATERIAL, USE AND PREPARATION OF SAID SOLID MATERIAL**

(57) A solid material comprising or, alternatively, consisting of: (i) at least one metal selected from among Fe, Co, Ni, Mo, Ru, V, Mn; (ii) at least a support for said at least one metal (i), said support being an oxide of Ti, Si, Ce, Al, Zr, La, Eu, Pr or Nb; (iii) at least a hydride of an alcali metal or an alcali-earth metal; (iv) at least a nitride. A use of said solid material as a catalyst, and a process for the preparation of a solid material are also disclosed.

FIG. 1(a)

EP 4 552 738 A1

## Description

Field of application

The invention pertains to a solid material, a use of said solid material as a catalyst, and a process for preparing said solid material.

Prior art

Ammonia is synthesized industrially with the Haber-Bosch process wherein molecular nitrogen and hydrogen are reacted at elevated temperature and pressure in presence of a suitable catalyst.

The catalyst accomplishes two functions during synthesis, namely the activation of molecular hydrogen and the activation of molecular nitrogen to form reactive atomic species. These activations typically involve electronic transfer reactions promoted by the high temperature and the presence of promoters with electrondonating properties.

Several catalysts are active for the synthesis of ammonia.

Historically, iron (Fe)-based catalysts comprising $Fe_3O_4$ and a few percentages of $Al_2O_3$ and $K_2O$ have been used for the ammonia synthesis in the temperature range of 400 °C to 500 °C and in the pressure range 150 bar to 300 bar. More recently, ruthenium (Ru)-based catalysts made it possible to synthesize ammonia under milder conditions e.g., at a temperature of 250 °C - 400 °C and a pressure of approx. 110 bar.

Nowadays, commonly used catalysts for the synthesis of ammonia are supported catalysts wherein the active catalytic elements are dispersed onto supports to reduce their manufacturing cost, increase the dispersion of the active species and, in some cases, promote the activation of nitrogen through electron donation.

For instance, known supported catalysts for the synthesis of ammonia include Ru/C, Ru/MgO and Ru/CaO.

In the art, there is a growing interest in finding ammonia synthesis catalysts characterized by high activity, and capable of operating at temperatures and/or pressures lower than those typical for Fe-based industrial catalysts. This is especially required for green ammonia applications in which the energy sources are intermittent. Also, such catalysts should be produced in a less expensive and less energy-intensive manner.

Summary of the invention

The invention aims to overcome the above drawbacks of the prior art.

Object of the present invention is a solid material comprising or, alternatively, consisting of:

(i) at least one metal selected from among Fe, Co, Ni, Mo, Ru, V, Mn;

(ii) at least a support for said metal (i), said support being an oxide of Ti, Si, Ce, Al, Zr, La, Eu, Pr or Nb;

(iii) at least a hydride of an alcali metal or an alcali-earth metal;

(iv) at least a nitride, preferably selected from the group consisting of a nitride of Li, La, Ti, Zr, V, Ca, Ba, Nb, Ce and mixtures thereof.

Another object of the present invention is a use of said solid material as a catalyst.

Still another object of the present invention is a process for the preparation of a solid material. Said method comprises the following steps:

(I) providing at least one salt or complex of a metal selected from among Fe, Co, Ni, Mo, Ru, V, Mn and contacting said metal salt or complex with a solution or solvent to form a metal-containing solution;

(II) providing at least a support, said support being an oxide of Ti, Si, Ce, Al, Zr, La, Eu, Pr or Nb, and contacting said support with said metal-containing solution to form a suspension;

(III) desiccating said suspension of step (II) to obtain a solid powder (also called "supported metal");

(IV) optionally subjecting said solid powder of step (III) to a purification step to obtain a purified solid powder;

(V) mixing said solid powder of step (III) or said purified solid powder of step (IV) with at least a hydride of an alcali metal or an alcali-earth metal and with a nitride, preferably selected from the group consisting of a nitride of Li, La, Ti, Zr, V, Ca, Ba, Nb, Ce and mixtures thereof, to yield said solid material.

Definitions used in the present description

"Support" means a material in solid form, that is typically characterized by a high surface area, that allows to affix or deposit the metal over its surface.

"Reducing agent" means a substance that loses electrons to other substances in a redox reaction and gets oxidized to a higher valency state.

"Precipitation agent" means a substance which is added to a medium to cause precipitation of another substance present in the medium. Such precipitation may be a selective precipitation for the substance that has to be precipitated from the medium.

"Inert atmosphere" means an atmosphere devoid of reactive gases, for instance oxygen. In more details, an inert atmosphere does not affect the synthesis of the solid material, e.g., it does not induce a chemical or electrochemical reaction or physical interaction between the gases contained in the atmosphere and the solid material undergoing synthesis. An inert atmosphere may be obtained with nitrogen, argon, or helium as inert gases.

"Nanoparticles" means particles with a mean particle size distribution comprised from 1 nanometre (nm) to 100 nm. Preferably, said mean particle size distribution is comprised from 2 nm to 80 nm, more preferably comprised from 3 nm to 70 nm, still more preferably comprised from 4 nm to 30 nm. Such mean particle size distribution may be determined with known analysis methods, such as electron microscopy.

"BET" is acronym of Brunauer-Emmett-Teller that is a known analysis method for measuring specific surface area of materials using physical adsorption of gas molecules (nitrogen molecules) on a solid surface.

"BJH" is acronym of Barrett-Joyner-Halenda that is another known analysis employed to determine pore volumes and pore diameters using a gas (nitrogen) adsorption and desorption technique.

Preferred embodiments of the present invention

Said solid material is preferably in the form of a powder, of a granule or of a shaped body (such as a cylinder, a pellet, or a bead).

According to an embodiment, a weight ratio (iii):(iv) is comprised from 3:1 to 1:10, preferably comprised from 2:1 to 1:7, more preferably comprised from 1:1 to 1:5, even more preferably comprised from 1:1 to 1:3.

According to another embodiment, a weight ratio [(i) + (ii)] : [(iii) + (iv)] is comprised from 15:1 to 1:1, preferably comprised from 10:1 to 1:1, more preferably comprised from 5:1 to 1:1, even more preferably comprised from 3:1 to 1:1.

Preferably, said solid material comprises, expressed as a weight percentage (%wt) of each component (i), (ii), (iii), (iv) with respect to the overall weight said solid material:

(i) in an amount comprised from 5%wt to 25%wt, preferably from 7%wt to 20%wt, more preferably from 10%wt to 18%wt; even more preferably from 12%wt to 15%wt;

(ii) in an amount comprised from 25%wt to 70%wt, preferably from 30%wt to 65%wt, more preferably from 40%wt to 60%wt; even more preferably from 45%wt to 58%wt;

(iii) in an amount comprised from 3%wt to 20%wt, preferably from 5%wt to 18%wt, more preferably from 7%wt to 15%wt; even more preferably from 8%wt to 12%wt;

(iv) in an amount comprised from 8%wt to 35%wt, preferably from 10%wt to 30%wt, more preferably from 15%wt to 25%wt; even more preferably from 18%wt to 22%wt.

Said weight percentages refer to the overall weight of the single component (i), (ii), (iii) or (iv) in the solid material. This means that if, e.g., more metals are present as component (i) in the solid material, the sum of the weights of such metals in the solid material is comprised in the ranges or sub-ranges mentioned herein before. Same independently applies for the support(s) (ii), the hydride(s) (iii) and/or the nitride(s) (iv).

Said metal (i) is preferably dispersed on said support (ii) in the form of nanoparticles.

Preferably, said solid material is characterized by:

- a BET specific surface area comprised from 45 $m^2/g$ to 800 $m^2/g$, preferably comprised from 50 $m^2/g$ to 500 $m^2/g$, more preferably comprised from 55 $m^2/g$ to 200 $m^2/g$, even more preferably comprised from 57 $m^2/g$ to 78 $m^2/g$; and/or

- a pore volume - determined by the BJH method - comprised from 0.05 $cm^3/g$ to 1.50 $cm^3/g$, preferably comprised from

0.06 cm$^3$/g to 1.00 cm$^3$/g, more preferably comprised from 0.08 cm$^3$/g to 0.50 cm$^3$/g, even more preferably comprised from 0.10 cm$^3$/g to 0.30 cm$^3$/g; and/or

- a pore diameter - determined by the BJH method - comprised from 5 nm to 30 nm, preferably comprised from 10 nm to 25 nm, more preferably comprised from 12 nm to 20 nm, even more preferably comprised from 13 nm to 19 nm.

According to a preferred embodiment, said solid material comprises at least two metals (i) (such as, only two metals or two or more metals), these metals being preferably non-sinterisable with each other.

Preferably, said solid material comprises at least two metals that are in a ratio by weight comprised from 5:1 to 1:5, more preferably comprised from 4:1 to 1:4, even more preferably comprised from 3:1 to 1:3, still more preferably comprised from 2:1 to 1:2, such as comprised from 1.5:1 to1:1.5, or of 1:1.

More preferably, said metal (i) is Fe and/or Co.

According to another preferred embodiment, said metal (i) is Mo and/or Co.

According to different embodiments, said at least a support (ii) is selected from among: $TiO_2$, doped $TiO_2$, $SiO_2$, doped-$SiO_2$, $CeO_2$, $SiO_2$-$Al_2O_3$, $Al_2O_3$, $\gamma$-$Al_2O_3$, $ZrO_2$, doped $ZrO_2$, $La_2O_3$, $Eu_2O_3$, $Pr_2O_3$, $Nb_2O_5$, zeolite; preferably from among $TiO_2$, doped $TiO_2$, $SiO_2$, doped-$SiO_2$, and mixtures thereof; even more preferably from among $TiO_2$ and/or $SiO_2$.

A combination of Fe and/or Co as metal(s) (i) with $TiO_2$ and/or $SiO_2$ as support(s) (ii) is particularly preferred.

According to another embodiment, (iii) is a hydride of Li, Na, K, Ca, Ba, or Sr; preferably of Li, Ca, Na or K; even more preferably of Li or Ca.

According to still another embodiment, (iv) is lithium nitride ($Li_3N$) or lanthanum nitride (LaN).

Said solid material preferably is, comprises or consists of at least one selected from:

-

Co/$TiO_2$/LiH/$Li_3N$;

-

Co/$SiO_2$/LiH/$Li_3N$;

-

Fe/$TiO_2$/LiH/$Li_3N$;

-

Fe/$SiO_2$/LiH/$Li_3N$;

-

Fe-Co/$TiO_2$/LiH/$Li_3N$;

-

Fe-Co/$SiO_2$/LiH/$Li_3N$;

-

Fe-Co/$CeO_2$/LiH/$Li_3N$;

-

Fe-Co/γ-Al$_2$O$_3$/LiH/Li$_3$N;

-

Fe-Co/ZrO$_2$/LiH/Li$_3$N;

-

Fe-Co/TiO$_2$/CaH$_2$/Li$_3$N;

-

Mo-Co/TiO$_2$/LiH/Li$_3$N.

In a preferred embodiment of said use, said catalyst is an ammonia synthesis catalyst, said ammonia synthesis being performed in ammonia-forming conditions in presence of a make-up gas containing nitrogen and hydrogen.

Preferably, said ammonia-forming conditions comprise a reaction temperature comprised from 200 °C to 500 °C, preferably comprised from 210 °C to 400 °C, more preferably comprised from 220 °C to 380 °C, even more preferably comprised from 250 °C to 370 °C, and a reaction pressure comprised from 1 bar to 150 bar, preferably comprised from 2 bar to 100 bar, more preferably comprised from 3 bar to 80 bar, even more preferably comprised from 5 bar to 40 bar.

Said salt or complex of step (I) is preferably selected from FeCl$_3$, Fe(NO$_3$)$_3$, Fe(acac)$_3$ (Iron(III) acetylacetonate), CoCl$_2$, and mixtures thereof.

Preferably, no capping agent is used in step (I), e.g., to prevent aggregation of nanoparticles. Indeed, the applicant has discovered through electron microscopy investigation that the use of a capping agent is not required to form metal nanoparticles in step (I). Widely used capping agents used in the literature, but not used in the present invention, are cetyltrimethylammonium chloride and citric acid.

According to an embodiment, after step (I) and before step (II) the process may further comprise contacting the metal-containing solution with a reducing agent and/or with a precipitating agent (e.g., complexing agent).

According to another embodiment, the process may further comprise contacting the suspension of step (II) with a reducing agent and/or a precipitating agent (e.g., complexing agent), preferably before step (III).

According to still another embodiment, when no reducing agent is used during the process, reduction of solid material may be carried out in situ during ammonia synthesis.

Suitable reducing agents are, as an example, sodium borohydride (NaBH$_4$) or potassium borohydride (KBH$_4$).

Suitable precipitating agents are, for instance, an aqueous solution of a carbonate salt or urea. Preferably, said carbonate salt is (NH$_4$)$_2$CO$_3$, Na$_2$CO$_3$ or K$_2$CO$_3$.

In the art is known that boron can be incorporated during the preparation of catalysts using for instance NaBH$_4$ to improve the catalytic activity of the synthesized catalyst. In the present invention when sodium or potassium borohydride is used as a reducing agent, such reducing agent is substantially not present in the solid material but is only used to induce the precipitation of the metal (i) on the support (ii). In other words, the reducing agent is only used to transform metal ions (e.g., Co$^{2+}$) into metal nanoparticles (e.g., metallic cobalt) on the support surface and not to incorporate boron therein.

Preferably, the optional step (IV) includes at least one washing operation. Washing operations can be carried out using distilled water as a washing agent at a temperature comprised from 40 °C to 100°C or preferably at a temperature comprised from 80 °C to 95 °C.

Particularly preferably, the washing operation in step (IV) is carried out to remove any excess of boron. The washing operation can be carried out to remove said excess of boron from the surface and/or from the bulk of the support leaving only metal nanoparticles.

Preferably, a content of boron remaining in the purified solid powder after step (IV) is equal to or smaller than 1 % wt, preferably equal to or smaller than 0.5 %wt, with respect to the overall weight of the said purified solid powder. A residual content of boron remaining in said purified solid powder - and preferably in the solid material - may be comprised from 0.001 %wt to 0.8 %wt, or from 0.01 %wt to 0.7 %wt, or from 0.1 %wt to 0.5 %wt.

In accordance with the above, in an embodiment said step (IV) includes reducing at least partially a boron content of said purified solid powder.

In a preferred embodiment of said process, step (V) is not carried out in an inert controlled atmosphere, e.g., is performed in atmospheric air.

In another preferred embodiment, said step (V) comprises a dry mechanical mixing of said solid powder or purified solid powder with said at least one hydride and said at least one nitride, wherein said hydride and said nitride are both in powder form.

Step (III) is preferably carried out by filtration on a membrane, more preferably such membrane having a pore size comprised from 0.10 $\mu$m to 0.40 $\mu$m, even more preferably from 0.20 $\mu$m to 0.30 $\mu$m, still more preferably of about 0.22 $\mu$m.

Preferably, said process is used to prepare the solid material according to any of the previous embodiments. Hence, preferred embodiments of said solid material apply - *mutatis mutandis* - to the process.

Advantageous effects of the invention

Advantageously, a combination of a hydride and a nitride allows to obtain a solid material with improved catalytic activity at lower temperatures and/or pressures for ammonia synthesis with respect to known catalysts.

Advantageously, the support (ii) guarantees a good dispersion of the metal (i), and the combination of a hydride and a nitride allows to synergistically increase the performance as a catalyst for ammonia synthesis: on the one hand the production of ammonia at lower temperatures is greatly improved, on the other the solid material can be prepared in a simple and low energy-intensive way.

Advantageously, the presence of at least two non-sinterisable metals (i) allows to achieve higher performances, and to obtain a longer service life of the solid material.

Advantageously, the solid material of the present invention exhibits an improved on-stream stability because the support can further promote a resistance against sintering which typically occurs when a metal is directly deposited on a hydride.

Advantageously, the solid material is synthesized with a low energy consumption because mixing between supported metal, hydride and nitride is preferably carried out in open-air and at room temperature thus not requiring the use of pressure-sealed vessels or the synthesis in a chemically and thermally controlled environment.

Advantageously, pressure-sealed vessels are not required for carrying out the present process, so that excellent control over the metal loading, prevention of metal leaching phenomena, and optimal distribution of the metal over the support are possible.

The process is therefore particularly suited for large scale productions.

Advantageously, the solid material of the present invention provides improved production flexibilities because it is capable of performing in atmospheres with different hydrogen to nitrogen ratios.

Advantageously, an enhanced catalytic activity can be surprisingly obtained by simple mechanical mixing of the components.

Advantageously, low hydride and nitride amounts are necessary to achieve catalytically significant improvements.

Advantageously, performing a mixing of the hydride and of the nitride only after preparation of the supported metal has been completed prevents any degradation of the hydride during the further preparation.

Besides, in the initial preparation stage of the ammonia catalyst the powder can be produced with the desired mechanical and structural properties prior to the addition of the hydride and of the nitride. This is advantageous because processing the powder to obtain desired properties is more challenging once the hydride has been added.

Advantageously, performing a washing operation during step (IV) has proven to be beneficial for the catalyst performance during ammonia synthesis.

Brief description of the drawings

FIG. 1(a): Catalytic performance (as normalized productivity in function of comparable example 3 at 350 °C) of solid materials according to the invention at different temperatures under 5 bars, GHSV=40 000 h$^{-1}$ and H$_2$/N$_2$ = 3;

FIG. 1(b): Catalytic performance (as normalized productivity in function of comparable example 3 at 350 °C) of solid materials according to the invention at different temperatures under 5 bars, GHSV=40 000 h$^{-1}$ and H$_2$/N$_2$ = 1;

FIG. 1(c): Influence of temperature on catalytic performance (as normalized productivity un function of comparable example 3 at 350 °C) for a specimen Fe-Co/TiO$_2$/LiH/Li$_3$N (Example 4) according to the present invention at 5 bars, GHSV=40 000 h$^{-1}$ and H$_2$/N$_2$ = 1;

FIG. 2: Effect of pressure on ammonia production (as normalized productivity in function of ammonia production of example 4 at 10 Bar) measured at 350 °C, $H_2/N_2 = 3$ and 40'000 h$^{-1}$ using the specimen of the solid material obtained in Example 4;

FIG. 3: Diffractograms of **(a)** P25 $TiO_2$ (Degussa P25 Titanium Dioxide Nanopowder; CAS N. 13463-67-7; Rutile:Anatase / 85:15; 99.9%, 20 nm); **(b)** Fresh (below) and spent (above) 20%Co/$TiO_2$; **(c)** Fresh (below) and spent (above) Fe-Co/$TiO_2$; **(d)** Fresh (below) and spent (above) Fe/$TiO_2$;

FIG. 4: nitrogen ($N_2$) physisorption isotherms of **(a)** P25 $TiO_2$; **(b)** 20%Co/$TiO_2$ (curve above) and Co/$TiO_2$/LiH/$Li_3N$ (curve below) of Example 1; **(c)** 10%Fe-10%Co/$TiO_2$ (curve above) and Fe-Co/$TiO_2$/LiH/$Li_3N$ (curve below) of Example 4; **(d)** 20%Fe/$TiO_2$ (curve above) and Fe/$TiO_2$/LiH/$Li_3N$ (curve below) of Example 3.

The present invention will now be described in a greater detail in view of the following non-limiting examples.

## EXAMPLES

### 1. Example 1 (invention): Synthesis of Co/TiO$_2$/LiH/Li$_3$N

In a 150 mL vessel, 0.55 g of $CoCl_2$ (Alfa Aesar 98%, 20 %wt Co) was dissolved in 48 mL of distilled water. The resulting solution was magnetically stirred for 20 minutes at room temperature. Next, 1 g of commercial $TiO_2$ (P25 supplied by Degussa) was added inside the vessel to form a suspension. $TiO_2$ particles were dispersed for another 5 minutes under magnetic agitation.

In the meanwhile, 2.4 g of $NaBH_4$ (Merck, >99%) was dissolved in 52 mL of distilled $H_2O$ inside a second vessel under magnetic stirring for 5 minutes at room temperature. Then, the $NaBH_4$ aqueous solution was added dropwise to the $CoCl_2$-$TiO_2$ suspension in order to avoid an explosion during the exothermic reduction of $Co^{2+}$ ions into cobalt nanoparticles. During the addition of the $NaBH_4$ aqueous solution the pink suspension became dark blue with the consequently formation of foam. This new suspension was kept under magnetic stirring at room temperature for 1 h to allow the complete deposition of cobalt nanoparticles on the support (i.e., $TiO_2$).

Afterwards, the solid denoted as 20%Co/$TiO_2$ was recovered from the suspension by vacuum filtration using a 220 nm filter membrane (Merck). Subsequently, the solid was washed 3 times employing 25 mL of warm distilled $H_2O$ previously heated at 90 °C. The solid and the hot water were agitated with a spatula during vacuum filtration in order to facilitate the dissolution of boride species and other impurities (i.e., Cl$^-$ ions) present on the surface of the solid. Next, the solid was left under the hood overnight followed by vacuum drying at 60 °C for 2 h to yield ~1.45 g of 20%Co/$TiO_2$.

Finally, the 20%Co/$TiO_2$ powder was mixed with $Li_3N$ (Sigma-Aldrich, >99.5%) and LiH (Sigma-Aldrich, 95%) in a 70:20:10 weight ratio using an agate mortar. The resulting powder - Co/$TiO_2$/LiH/$Li_3N$ - was placed inside a desiccator prior to use.

### 2. Example 2 (invention): Synthesis of Co/SiO$_2$/LiH/Li$_3$N

The catalyst was prepared following the procedure hereabove reported in example 1. In this case, $TiO_2$ support was replaced by $SiO_2$.

### 3. Example 3 (invention): Synthesis of Fe/TiO$_2$/LiH/Li$_3$N

In a 150 mL vessel, 0.74 g of $FeCl_3$ (Alfa Aesar 98%, 20 %wt Fe) was dissolved in 48 mL of distilled water. The resulting solution was magnetically stirred for 20 minutes at room temperature. Next, 1 g of commercial $TiO_2$ (P25 supplied by Degussa) was added inside the vessel to form a suspension. $TiO_2$ particles were dispersed for another 5 minutes under magnetic agitation.

In the meanwhile, 2.5 g of $NaBH_4$ (Merck, >99%) was dissolved in 52 mL of distilled $H_2O$ inside a second vessel under magnetic stirring for 5 minutes at room temperature. Then, the $NaBH_4$ aqueous solution was added dropwise to the $FeCl_3$-$TiO_2$ suspension in order to avoid an explosion during the exothermic reduction of $Fe^{3+}$ ions into iron nanoparticles. During the addition of the $NaBH_4$ aqueous solution the suspension passed from orange to black with the consequently formation of foam. This new suspension was kept under magnetic stirring at room temperature for 1 h to allow the complete deposition of iron nanoparticles on the support (i.e., $TiO_2$).

Afterwards, the solid denoted as 20%Fe/$TiO_2$ was recovered from the suspension by vacuum filtration using a 220 nm filter membrane (Merck). Subsequently, the solid was washed 3 times employing 25 mL of warm distilled $H_2O$ previously heated at 90 °C. The solid and the hot water were agitated with a spatula during vacuum filtration in order to facilitate the dissolution of boride species and other impurities (i.e., Cl$^-$ ions) present on the surface of the solid. Next, the solid was left under the hood overnight followed by vacuum drying at 60 °C for 2 h to yield ~1.45 g of 20%Fe/$TiO_2$.

Finally, the 20%Fe/TiO$_2$ powder was mixed with Li$_3$N (Sigma-Aldrich, >99.5%) and LiH (Sigma-Aldrich, 95%) in a 70:20:10 weight ratio using an agate mortar. The resulting powder - Fe/TiO$_2$/LiH/Li$_3$N - was placed inside a desiccator prior to use.

4. Example 4 (invention): Synthesis of Fe-Co/TiO$_2$/LiH/Li$_3$N

In a 150 mL vessel, 0.25 g of CoCl$_2$ (Alfa Aesar 98%, 10 %wt Co) and 0.33 g of FeCl$_3$ (Alfa Aesar 98%, 10 %wt Fe) were dissolved in 48 mL of distilled water. The solution containing both metal ions dissolved was magnetically stirred for 20 minutes at room temperature. Next, 1 g of commercial TiO$_2$ (P25 supplied by Degussa) was added inside the vessel to form a suspension. TiO$_2$ particles were dispersed for another 5 minutes under magnetic agitation.

In the meanwhile, 2.2 g of NaBH$_4$ (Merck, >99%) was dissolved in 52 mL of distilled H$_2$O inside a second vessel under magnetic stirring for 5 minutes at room temperature. Then, the NaBH$_4$ aqueous solution was added dropwise to the CoCl$_2$- FeCl$_3$-TiO$_2$ suspension in order to avoid an explosion during the exothermic reduction of Fe$^{3+}$ and Co$^{2+}$ ions into metal nanoparticles. During the addition of the NaBH$_4$ aqueous solution the orange suspension became dark blue with the consequently formation of foam. This new suspension was kept under magnetic stirring at room temperature for 1 h to allow the complete deposition of metal nanoparticles on the support (i.e., TiO$_2$).

Afterwards, the solid denoted as 10%Fe-10%Co/TiO$_2$ was recovered from the suspension by vacuum filtration using a 220 nm filter membrane (Merck). Subsequently, the solid was washed 3 times employing 25 mL of warm distilled H$_2$O previously heated at 90 °C. The solid and the hot water were agitated with a spatula during vacuum filtration in order to facilitate the dissolution of boride species and other impurities (i.e., Cl$^-$ ions) present on the surface of the solid. Next, the solid was left under the hood overnight followed by vacuum drying at 60 °C for 2 h to yield ~1.45 g of 10%Fe-10%Co/TiO$_2$.

Finally, the 10%Fe-10%Co/TiO$_2$ powder was mixed with Li$_3$N (Sigma-Aldrich, >99.5%) and LiH (Sigma-Aldrich, 95%) in a 70:20:10 weight ratio using an agate mortar. The resulting powder - Fe-Co/TiO$_2$/LiH/Li$_3$N - was placed inside a desiccator prior to use.

5. Comparative Example 1: synthesis of Fe/TiO$_2$-LiH

In a vessel, 7.14 g tetradecyltrimethylammonium bromide (TTAB, TCI >98%) was dissolved in 47.34 g distilled water. The solution was kept under magnetic stirring at room temperature for 20 min. 0.74 g (20 wt.% Fe) FeCl$_3$ was added to the TTAB aqueous solution and the mixture was kept under magnetic stirring at room temperature for 10 min. Subsequently, 1.0 g TiO$_2$ (P25, manufactured by Degussa) used as a support was added and the suspension was kept under magnetic stirring at room temperature for 5 min.

In a separate vessel, 1.6 g NaBH$_4$ (Merck) was dissolved in 52 g distilled water and kept under magnetic stirring at room temperature for 5 min. Afterwards, the NaBH$_4$ solution was added dropwise to the aqueous suspension containing TTAB, FeCl$_3$ and the TiO$_2$ support. The resulting mixture was allowed to react for 1 h at room temperature under magnetic stirring. The suspension was then filtered using a 220 nm membrane filter and the solid was washed three times with 25 mL hot distilled water (temperature of ca. 90°C). The resulting solid was finally dried in air for 48 h. The obtained powder of Fe/TiO$_2$ was about 1.4 g.

Subsequently, the Fe/TiO$_2$ powder was mechanically mixed with a LiH powder using a 50:50 weight ratio in a porcelain mortar for 2 min and the resulting powder - Fe/TiO$_2$/LiH - was stored in a dessicator prior to use. The Fe loading obtained in the Fe/TiO$_2$/LiH powder was of 10 wt.%.

6. Comparative Example 2: synthesis of Co/TiO$_2$-LiH

In a vessel, 7.14 g tetradecyltrimethylammonium bromide (TTAB, TCI >98%) was dissolved in 47.34 g distilled water. The solution was kept under magnetic stirring at room temperature for 20 min. Subsequently, 0.55 g (20 wt.% Co) CoCl$_2$ (Alfa Aesar, 99.7%, anhydrous) was added to the TTAB aqueous solution and the mixture was kept under magnetic stirring at room temperature for 10 min. Subsequently, 1 g TiO$_2$ (P25, manufactured by Degussa) used as a support was added and the suspension was kept under magnetic stirring at room temperature for 5 min.

In a separate vessel, 1.52 g NaBH$_4$ (Merck) was dissolved in 52 g distilled water and kept under magnetic stirring at room temperature for 5 min. Afterwards, the NaBH$_4$ solution was added dropwise to the aqueous suspension containing TTAB, CoCl$_2$ and the TiO$_2$ support. The resulting mixture was allowed to react for 1 h at room temperature under magnetic stirring. Then, the suspension was filtered using a 220 nm membrane filter and the solid was washed three times with 25 mL hot distilled water (temperature of ca. 90°C). The resulting solid was finally dried in air for 48 h and further dried under vacuum for 3h at room temperature. The obtained powder of Co/TiO$_2$ was about 1.4 g.

Afterwards, the Co/TiO$_2$ powder was mechanically mixed with a LiH powder using a 50:50 weight ratio in a porcelain mortar for 2 min. The resulting powder was stored in a dessicator prior to use. The Co loading obtained in the Co/TiO$_2$-LiH powder was of 10 wt.%.

### 7. Comparative Example 3: synthesis of Fe/LiH

The Fe/LiH powder was synthesized following the protocol described in Nature Chem 2017, 9, 64 - 70. 2 g of LiH (Alfa Aesar, >97%) was mixed with 0.659 g (10 wt.% Fe) $FeCl_3$ (Alfa Aesar, 98%, anhydrous) in a 45 mL stainless-steel grinding bowl. 5 beads of 10 mm diameter were then added (bead-to-sample mass ratio of 10) and the bowl was sealed. The latter was subsequently introduced in a Pulverisette 7 Premium Line (Fritsch) planetary ball-mill operating at 200 rpm. The sample was ball-milled for 3 h (6 cycles of 30 min with inversion of the rotation direction between each cycle) and was next washed three times with 50 mL THF (Roth, 99.5%) in order to remove LiCl. The sample was dried under vacuum for 3 h at room temperature and stored in a desiccator prior to use. The obtained Fe/LiH powder was about 2.3 g.

### 8. Comparative Example 4: Fe/CeO$_2$-Li$_3$N

The Fe/$CeO_2$-$Li_3N$ powder was synthesized in the same manner as in Example 4 except that LiH was replaced by $Li_3N$ (Sigma Aldrich, >99.5%, 60 mesh).

### 9. Comparative Example 5: synthesis of Cs-Ru/CeO$_2$

The Ru/$CeO_2$ powder was synthesized in a similar manner to Fe/$CeO_2$ in Example 4 except that $Ru(NO)(NO_3)_3$ (Alfa aesar, Ru 31.3% min.) was used as metal precursor instead of $FeCl_3$. Namely, 0.1651 g Ru $Ru(NO)(NO_3)_3$ (5 wt.% Ru) was introduced in the TTAB aqueous solution and the resulting mixture was kept under magnetic stirring for 30 min at 30°C. After adding 1 g $CeO_2$, a solution made of 0.8852 g $NaBH_4$ dissolved in 52 g distilled water was added dropwise and the resulting suspension was stirred for 1 h at room temperature. The rest of the synthesis was the same as in Example 4. The obtained powder of Ru/$CeO_2$ was about 1.05 g.

The Cs promoter was introduced via wet impregnation method using a Cs-to-Ru molar ratio of 2. First, 0.2050 g $CsNO_3$ (Sigma Aldrich, 99%) (Cs to Ru molar ratio of 2) was dissolved in 50 g distilled water and the solution was kept under magnetic stirring for 10 min at room temperature. Then, the Ru/$CeO_2$ powder was added to the CsNO3 aqueous solution and the resulting suspension was kept under magnetic stirring for 15 min and subsequently sonicated for 30 min at room temperature. The solvent was then removed by evaporation using a Büchi Rotavapor R-200 apparatus operating at 50°C and 80 rpm. The obtained powder of Cs-Ru/$CeO_2$ was about 1.2 g and was kept in a desiccator prior to use.

### 10. Comparative Example 6: Synthesis of Cs-Ru/Al$_2$O$_3$

The Cs-Ru/$Al_2O_3$ powder was synthesized in the same manner as in Comparative example 4 except that the $CeO_2$ support was replaced by $Al_2O_3$ (Alfa Aesar) and that the Cs-to-Ru molar ratio was adjusted to 10.

### 11. Comparative Example 7: Ru/C

Ru/C is a standard commercially available catalyst, i.e., 5%Ru/activated carbon from Thermo Fisher Scientific.

### Example 5: Ammonia productivity calculation

After synthesis, the catalysts were tested in a reactor to generate gaseous ammonia, and ammonia productivity for each catalyst was calculated according to the procedure hereinafter reported.

0.12 mL of catalyst powder was mixed with 0.12 mL of glass beads (350-500 $\mu$m diameter) and arranged in a stainless-steel fixed bed reactor.

The fixed bed reactor was supplied with nitrogen ($N_2$, Air Liquide, 5.0 purity) and with hydrogen ($H_2$, Air Liquide, 5.0 purity). The, the gas hourly space velocity GHSV was in the range 20,000-40,000 h$^{-1}$.

The pressure in the reactor was kept at 5 bar and the catalyst was first treated at 350 °C for 3 h under the $N_2$:$H_2$ gas mixture. The temperature was then decreased to 300 °C and 250 °C while keeping the temperature constant for at least 1 h on each temperature plateau.

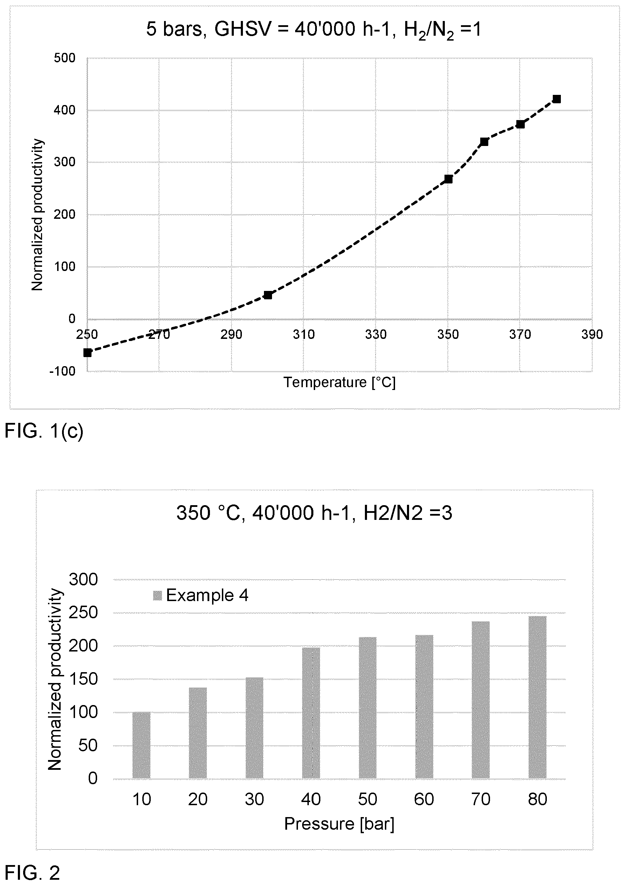

In a different procedure, 0.5 mL of catalyst granules were arranged in a stainless-steel fixed bed reactor. After reduction, the pressure was varied from 10 bar to 80 bar keeping the temperature at 350 °C. Each pressure step was kept for 6 hours. Productivity of ammonia with this procedure at different pressures are displayed in Fig. 2.

The effluent gas of the reactor of the flow system was analysed by gas chromatography (GC) analysis using an absolute calibration curve method. The analysis apparatus and conditions are summarized in Table 1.

Table 1

| Apparatus manufacturer | Global Analyser Solutions |
|---|---|
| Apparatus model | Compact GC 4.0 |
| Column type | Rt-Q-BOND 15 m x 0.32 mm |
| Support gas | Helium |
| Column temperature | 80 °C |

The productivity was subsequently calculated at 350 °C.

The calculated productivity value for the comparative example 3 (Fe/LiH) was then used to normalize the productivity value of the other specimens, and a percentage productivity (% Productivity) for these latter specimens was calculated as reported in Table 2.

In more detail, the percentage productivity value for each catalyst was calculated according to the following formula:

$$\%Productivity = \left( \frac{Productivity_i}{Productivity_{reference}} - 1 \right) \times 100$$

wherein:

$Productivity_i$ is the calculated productivity of a catalyst;
$Productivity_{reference}$ is the calculated productivity of the catalyst reported in the Comparative Example 3.

For Fig. 2, a productivity at 10 bar of Example 4 was used as reference.

Table 2

| Example | Catalyst | % Productivity |
|---|---|---|
| Example 1 (invention) | $Co/TiO_2/LiH/Li_3N$ | + 233 % |
| Example 2 (invention) | $Co/SiO_2/LiH/Li_3N$ | + 180 % |
| Example 3 (invention) | $Fe/TiO_2/LiH/Li_3N$ | +104 % |
| Example 4 (invention) | $Fe-Co/TiO_2/LiH/Li_3N$ | + 269 % |
| Comparative Example 1 | $Fe/TiO_2$-LiH | +47 % |
| Comparative Example 2 | $Co/TiO_2$-LiH | + 144 % |
| Comparative Example 3 | Fe/LiH | (normalization reference) |
| Comparative Example 4 | $Fe/CeO_2$-$Li_3N$ | -11 % |
| Comparative Example 5 | $Cs-Ru/CeO_2$ | -53 % |
| Comparative Example 6 | $Cs-Ru/Al_2O_3$ | -95 % |
| Comparative Example 7 | Ru/C | -19 % |

Table 2 shows that the % productivities of the solid materials according to the invention are noticeably higher than the productivity values calculated for the comparative examples.

The productivity of Example 1 must be compared with the productivity of Comparative Example 2 because these examples make use of the same metal, the same support, and the same hydride. These examples differ only in the presence of a nitride in Example 1 according to the invention. Same applies to Example 3 to be compared with Comparative Example 1.

Such enhancement in catalytic activity is clearly unexpected and can only be explained by the presence of a synergistic cooperation between the components (i)-(iv) of the solid material. Also, an active role of the oxide (ii) in the catalytic mechanism seems to be clearly suggested.

Example 6: Reaction temperatures and pressures of ammonia synthesis

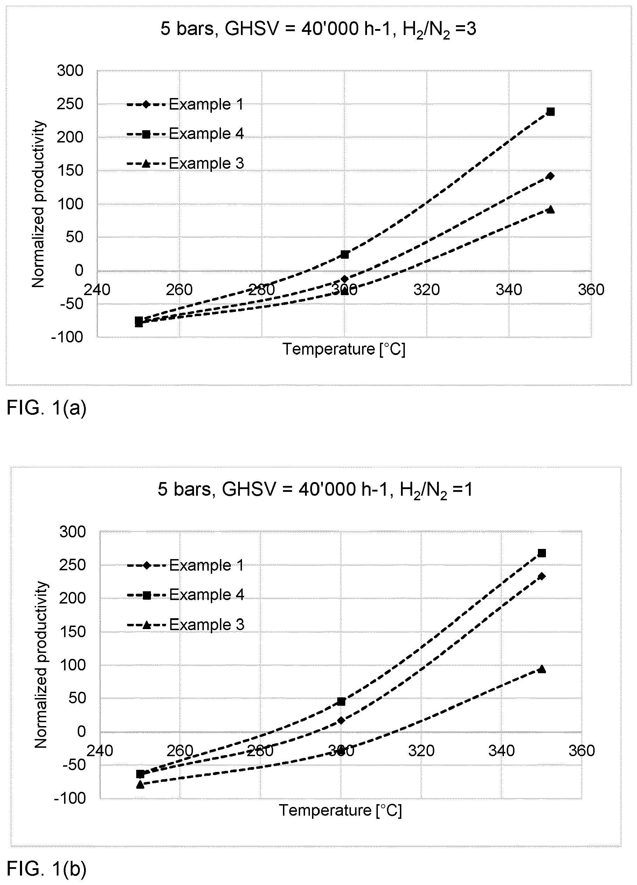

Solid materials according to the present invention have proven to be quite active as catalysts in ammonia production under different conditions such as temperatures comprised from 250 °C to 400 °C. Fig. 1(a) and Fig. 1(b) confirm that the specimen of Example 4 displays the greatest catalytic activity, also testing the catalyst under two different reaction atmospheres ($H_2/N_2$ = 1; $H_2/N_2$ = 3;). In addition, the latter is still active for $NH_3$ production in a wide range of pressures from 5 bars to 80 bars, as reported in Fig. 2.

To check the limits of the catalyst of Example 4, catalytic tests were performed at temperatures up to 380 °C. Fig. 1(c) shows the increment of $NH_3$ formation rate because of temperature increases.

Moreover, screening of activity at different pressure was performed and the results are reported in Fig. 2. By increasing the pressure, the activity of the catalyst increases in all pressure range from 10 bar to 80 bar.

Example 7: Sintering resistance of solid materials comprising more than one metal (i)

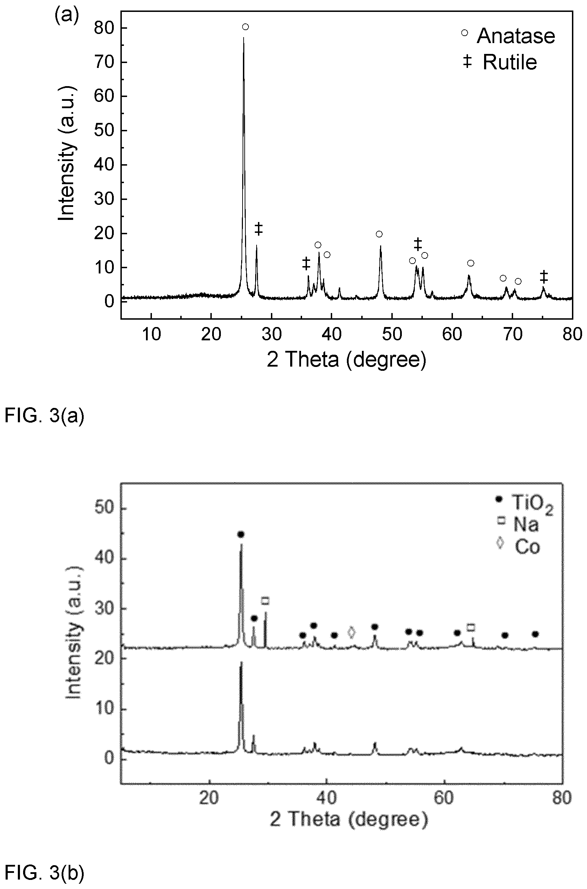

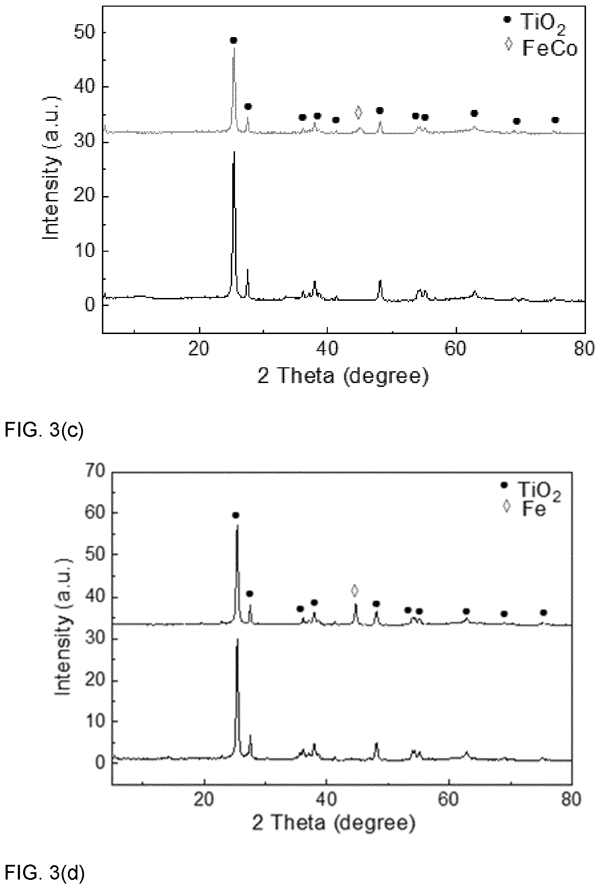

Three different supported metals (20%Co/$TiO_2$, Fe-Co/$TiO_2$, 20%Fe/$TiO_2$) were submitted to X-ray diffraction (XRD) and X-ray photoelectron spectroscopy (XPS) before and after a catalytic test to assess the possibility of metal nanoparticles sintering. Fig. 3(a) shows the diffractogram of the oxide support (i.e., $TiO_2$) displaying peaks which correspond to an anatase phase and a rutile phase. Supported metals before a catalytic test show the same peaks ascribed to $TiO_2$ suggesting a good dispersion of metal nanoparticles on the surface support. Conversely, supported metals after a catalytic test present additional peaks besides the above-mentioned anatase and rutile ones. 20%Co/$TiO_2$ displays a small peak at 44.4° corresponding to hexagonal cobalt nanoparticles. On the other hand, Fe-Co/$TiO_2$ - see Fig. 3(c) - shows an intermetallic Fe-Co alloy with a cubic geometry.

Table 3 shows the crystallite sizes by means of Sherer's equation proving that Fe-Co/$TiO_2$ contains smaller nanoparticles (mean particle size distribution ≈ 16 nm) than pure cobalt or iron catalysts (≈ 25 nm). Thus, the intermetallic Fe-Co nanoparticles on the Fe-Co/$TiO_2$ supported metal are more resistant to sintering under reaction conditions than the pure supported metals.

Table 3

| Supported metals | Crystallite size (nm) | Metal nanoparticle |
|---|---|---|
| Spent 20%Co/$TiO_2$ | 24 | Co (hexagonal) |
| Spent Fe-Co/$TiO_2$ | 16 | Fe-Co (cubic) |
| Spent 20%Fe/$TiO_2$ | 25 | Fe (cubic) |

The solid material can be in the form of a powder, of a granule or of a shaped body. The present characterization has been performed on a solid material in powder form.

Table 4 recapitulates the textural properties of the catalysts. In addition, $N_2$ physisorption isotherms are displayed in Fig. 5 for both supported metals and solid material.

Table 4

| Specimen | BET specific surface area ($m^2/g$)[a] | Pore volume ($cm^3/g$)* | Pore diameter (nm)* |
|---|---|---|---|
| Example 1 | 76 | 0.11 | 16 |
| Example 4 | 64 | 0.29 | 15 |
| Example 3 | 59 | 0.23 | 15 |
| *BJH method | | | |

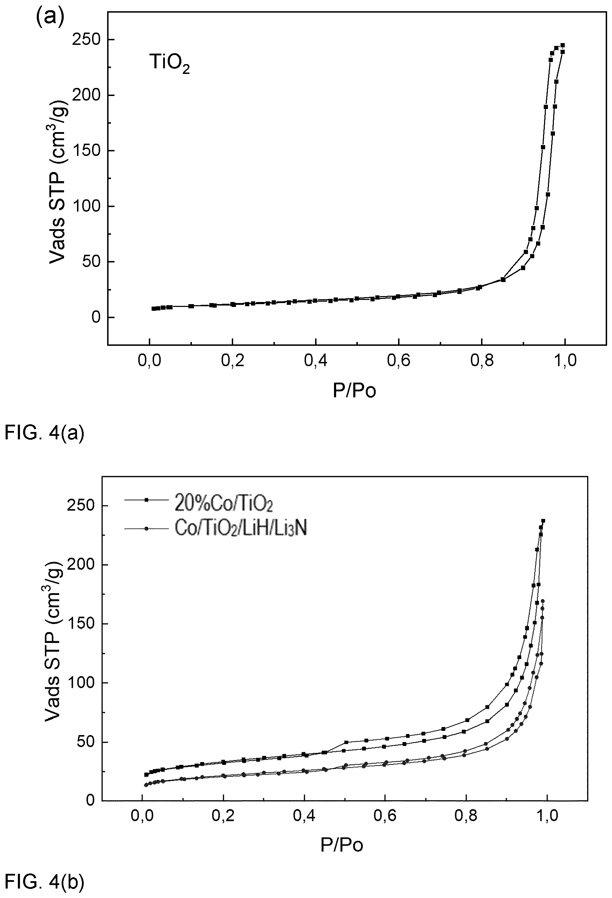

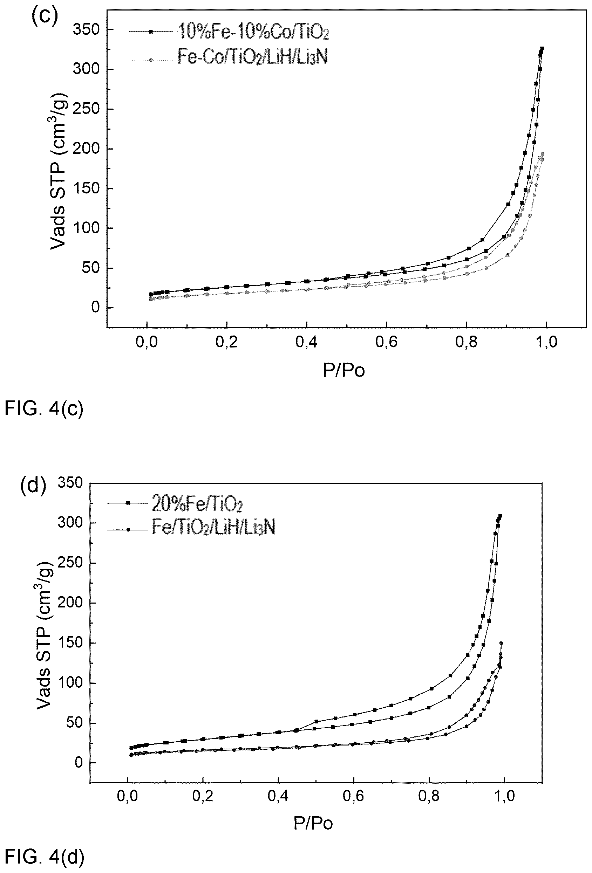

Reference is made to the $N_2$ physisorption isotherms shown from Fig. 4(a) to Fig. 4(d).

**Claims**

1. A solid material comprising or, alternatively, consisting of:

(i) at least one metal selected from among Fe, Co, Ni, Mo, Ru, V, Mn;

(ii) at least a support for said at least one metal (i), said support being an oxide of Ti, Si, Ce, Al, Zr, La, Eu, Pr or Nb;
(iii) at least a hydride of an alcali metal or an alcali-earth metal;
(iv) at least a nitride, preferably selected from the group consisting of a nitride of Li, La, Ti, Zr, V, Ca, Ba, Nb, Ce and mixtures thereof.

2. The solid material according to the previous claim, wherein a weight ratio (iii):(iv) is comprised from 3:1 to 1:10, preferably comprised from 2:1 to 1:7, more preferably comprised from 1:1 to 1:5, even more preferably comprised from 1:1 to 1:3.

3. The solid material according to any of the previous claims, comprising (expressed as a weight percentage (%wt) of each component with respect to the overall weight said solid material):

(i) in an amount comprised from 5%wt to 25%wt, preferably from 7%wt to 20%wt, more preferably from 10%wt to 18%wt; even more preferably from 12%wt to 15%wt;
(ii) in an amount comprised from 25%wt to 70%wt, preferably from 30%wt to 65%wt, more preferably from 40%wt to 60%wt; even more preferably from 45%wt to 58%wt;
(iii) in an amount comprised from 3%wt to 20%wt, preferably from 5%wt to 18%wt, more preferably from 7%wt to 15%wt; even more preferably from 8%wt to 12%wt;
(iv) in an amount comprised from 8%wt to 35%wt, preferably from 10%wt to 30%wt, more preferably from 15%wt to 25%wt; even more preferably from 18%wt to 22%wt.

4. The solid material according to any of the previous claims, wherein (i) is dispersed on said support (ii) in the form of nanoparticles, i.e., particles with a mean particle size distribution comprised from 1 nanometre (nm) to 100 nm, said mean particle size distribution being determined by electron microscopy.

5. The solid material according to any of the previous claims, **characterized by**:

- a BET specific surface area comprised from 45 $m^2/g$ to 800 $m^2/g$, preferably comprised from 50 $m^2/g$ to 500 $m^2/g$, more preferably comprised from 55 $m^2/g$ to 200 $m^2/g$, even more preferably comprised from 57 $m^2/g$ to 78 $m^2/g$;
- a pore volume - determined by the BJH method - comprised from 0.05 $cm^3/g$ to 1.50 $cm^3/g$, preferably comprised from 0.06 $cm^3/g$ to 1.00 $cm^3/g$, more preferably comprised from 0.08 $cm^3/g$ to 0.50 $cm^3/g$, even more preferably comprised from 0.10 $cm^3/g$ to 0.30 $cm^3/g$; and
- a pore diameter - determined by the BJH method - comprised from 5 nm to 30 nm, preferably comprised from 10 nm to 25 nm, more preferably comprised from 12 nm to 20 nm, even more preferably comprised from 13 nm to 19 nm.

6. The solid material according to any of the previous claims, wherein (i) is Fe and/or Co.

7. The solid material according to any of the previous claims, wherein said at least a support (ii) is selected from among: $TiO_2$, doped $TiO_2$, $SiO_2$, doped-$SiO_2$, $CeO_2$, $SiO_2$- $Al_2O_3$, $Al_2O_3$, $\gamma$-$Al_2O_3$, $ZrO_2$, doped $ZrO_2$, $La_2O_3$, $Eu_2O_3$, $Pr_2O_3$, $Nb_2O_5$, zeolite; preferably from among $TiO_2$, doped $TiO_2$, $SiO_2$, doped-$SiO_2$, and mixtures thereof; even more preferably from among $TiO_2$ and/or $SiO_2$.

8. The solid material according to any of the previous claims, wherein:

- (iii) is a hydride of Li, Na, K, Ca, Ba, or Sr; preferably of Li, Na or K; even more preferably of Li or Ca; and/or
- (iv) is lithium nitride or lanthanum nitride.

9. The solid material according to any of the previous claims, wherein said solid material comprises or consists of at least one selected from:

-

$Co/TiO_2/LiH/Li_3N$;

-

$Co/SiO_2/LiH/Li_3N$;

- Fe/TiO$_2$/LiH/Li$_3$N;

- Fe/SiO$_2$/LiH/Li$_3$N;

- Fe-Co/TiO$_2$/LiH/Li$_3$N;

- Fe-Co/SiO$_2$/LiH/Li$_3$N;

- Fe-Co/CeO$_2$/LiH/Li$_3$N;

- Fe-Co/$\gamma$Al$_2$O$_3$/LiH/Li$_3$N;

- Fe-Co/ZrO$_2$/LiH/Li$_3$N;

- Fe-Co/TiO$_2$/CaH$_2$/Li$_3$N;

- Mo-Co/TiO$_2$/LiH/Li$_3$N.

10. Use of the solid material according to any of the previous claims as a catalyst.

11. Use according to the previous claim, wherein said catalyst is an ammonia synthesis catalyst, said ammonia synthesis being performed in ammonia-forming conditions in presence of a make-up gas containing nitrogen and hydrogen.

12. Use according to the previous claim, wherein said ammonia-forming conditions comprise a reaction temperature comprised from 200 °C to 500 °C, preferably comprised from 210 °C to 400 °C, more preferably comprised from 220 °C to 380 °C, even more preferably comprised from 250 °C to 370 °C, and a reaction pressure comprised from 1 bar to 150 bar, preferably comprised from 2 bar to 100 bar, more preferably comprised from 3 bar to 80 bar, even more preferably comprised from 5 bar to 40 bar.

13. A process for the preparation of a solid material, said method comprising the following steps:

(I) providing at least one salt or complex of a metal selected from among Fe, Co, Ni, Mo, Ru, V, Mn and contacting said metal salt or complex with a solution or solvent to form a metal-containing solution;
(II) providing at least a support, said support being an oxide of Ti, Si, Ce, Al, Zr, La, Eu, Pr or Nb, and contacting said support with said metal-containing solution to form a suspension;
(III) desiccating said suspension of step (II) to obtain a solid powder;
(IV) optionally subjecting said solid powder of step (III) to a purification step to obtain a purified solid powder;
(V) mixing said solid powder of step (III) or said purified solid powder of step (IV) with at least a hydride of an alcali metal or an alcali-earth metal and with a nitride, preferably selected from the group consisting of a nitride of Li, La, Ti, Zr, V, Ca, Ba, Nb, Ce and mixtures thereof, to yield said solid material.

14. The process according to claim 13, wherein step (V) is performed in atmospheric air, and wherein said step (V) comprises a dry mechanical mixing of said solid powder or purified solid powder with said at least one hydride and said at least one nitride, wherein said hydride and said nitride are both in powder form.

15. The process according to claim 13 or 14, wherein said solid material of step (V) is as described in any of claims 1-9.

FIG. 1(a)

FIG. 1(b)

FIG. 1(c)

FIG. 2

(a)

FIG. 3(a)

FIG. 3(b)

FIG. 3(c)

FIG. 3(d)

FIG. 4(a)

FIG. 4(b)

(c)

FIG. 4(c)

(d)

FIG. 4(d)

| | Europäisches Patentamt European Patent Office Office européen des brevets | **EUROPEAN SEARCH REPORT** | **Application Number** EP 23 20 8846 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 106 881 133 A (DALIAN INST CHEMICAL PHYSICS CAS) 23 June 2017 (2017-06-23) * claims; examples * | 1-15 | INV. B01J23/745 B01J23/75 B01J27/24 |
| A | CN 106 881 132 A (DALIAN INST CHEMICAL PHYSICS CAS) 23 June 2017 (2017-06-23) * claims; examples * | 1-15 | B01J31/12 B01J35/00 B01J35/61 B01J35/63 |
| A | CN 108 080 014 A (DALIAN INST CHEM & PHYSICS CAS) 29 May 2018 (2018-05-29) * claims; examples * | 1-15 | B01J35/64 B01J37/04 C01C1/04 |
| A | PEIKUN WANG ET AL: "The Formation of Surface Lithium-Iron Ternary Hydride and its Function on Catalytic Ammonia Synthesis at Low Temperatures", ANGEWANDTE CHEMIE, WILEY - V C H VERLAG GMBH & CO. KGAA, DE, vol. 129, no. 30, 12 June 2017 (2017-06-12), pages 8842-8846, XP071372026, ISSN: 0044-8249, DOI: 10.1002/ANGE.201703695 * Paragraph bridging, pages 8842 and 8843: Supporting information, Catalyst Preparation and figure S3; figure 1 * | 1-15 | |

-/--

|  |  |  |
|---|---|---|
|  |  | **TECHNICAL FIELDS SEARCHED (IPC)** B01J C01C |

The present search report has been drawn up for all claims

| Place of search | Date of completion of the search | Examiner |
|---|---|---|
| Munich | 4 April 2024 | Mauger, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | -& PEIKUN WANG ET AL: "The Formation of Surface Lithium-Iron Ternary Hydride and its Function on Catalytic Ammonia Synthesis at Low Temperatures : Supporting Information", Angewandte Chemie, 12 June 2017 (2017-06-12), XP093147516, Retrieved from the Internet: URL:https://onlionelibrary.wiley.com/actio n/downloadSupplement?doi=10.1002%2Fanie.20 1703695&file=anie201703695-sup-0001-misc_i nformation.pdf [retrieved on 2024-04-03] ----- | | |
| A | RAVI MANOJ ET AL: "Lithium-nitrogen-hydrogen systems for ammonia synthesis: exploring a more efficient pathway using lithium nitride-hydride", CHEMICAL COMMUNICATIONS, vol. 58, no. 41, 1 January 2022 (2022-01-01), pages 6076-6079, XP093147370, UK ISSN: 1359-7345, DOI: 10.1039/D2CC01345B * page 6076 - page 6077; figures 1,2; table 1 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 4 April 2024 | Mauger, Jeremy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 20 8846**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-04-2024**

| Patent document cited in search report | | Publication date | Patent family member(s) | Publication date |
|---|---|---|---|---|
| CN 106881133 | A | 23-06-2017 | NONE | |
| CN 106881132 | A | 23-06-2017 | NONE | |
| CN 108080014 | A | 29-05-2018 | NONE | |

EPO FORM P0459

For more details about this annex : see Official Journal of the European Patent Office, No. 12/82